# EUROPÄISCHE PATENTSCHRIFT

(11) **EP 4 117 463 B1**
(45) Veröffentlichungstag und Bekanntmachung des Hinweises auf die Patenterteilung: **18.09.2024**
(21) Anmeldenummer: 21711213.5
(22) Anmeldetag: 09.03.2021
(51) Int. Cl.: A24C 5/34, B65B 19/30, G01N 21/00, G01N 21/88, G01N 21/952

(54) **MESSANORDNUNG UND VERFAHREN ZUR OPTISCHEN PRÜFUNG VON ARTIKELN DER TABAKVERARBEITENDEN INDUSTRIE**
MEASURING ARRANGEMENT AND METHOD FOR OPTICALLY TESTING ARTICLES OF THE TOBACCO PROCESSING INDUSTRY
AGENCEMENT DE MESURE ET PROCÉDÉ POUR TESTER OPTIQUEMENT DES ARTICLES DE L'INDUSTRIE DE TRANSFORMATION DU TABAC

(30) Priorität: 10.03.2020 DE 102020106444
(43) Veröffentlichungstag der Anmeldung: 18.01.2023
(73) Patentinhaber: Körber Technologies GmbH, 21033 Hamburg (DE)
(72) Erfinder: GAST, Hanno, 21256 Handeloh (DE); EL JARAD, Akram, 21423 Winsen (DE)
(74) Vertreter: Müller Verweyen
(86) Internationale Anmeldenummer: PCT/EP2021/055849
(87) Internationale Veröffentlichungsnummer: WO 2021/180681

(56) Entgegenhaltungen:
- EP-A1- 1 498 723
- EP-A1- 1 591 025
- EP-A1- 2 677 273
- EP-A1- 2 952 878
- EP-B1- 1 591 025
- DE-T2- 69 838 174

## Beschreibung

Die vorliegende Erfindung betrifft ein Verfahren und eine Messanordnung zum Prüfen einer Stirnfläche eines stabförmigen Artikels der tabakverarbeitenden Industrie mit einer Bereitstellungsvorrichtung für stabförmige Artikel, einer Fördervorrichtung mit mindestens einer Aufnahme für stabförmige Artikel, einer Beleuchtungseinrichtung zum Beleuchten einer Oberfläche eines stabförmigen Artikels, einer Kamera, eingerichtet und angeordnet zur Aufnahme von einer Oberfläche des stabförmigen Artikels, und einer Polarisationseinrichtung.

Zur Qualitätsüberwachung stabförmiger Produkte der tabakverarbeitenden Industrie sind im Bereich der Herstellmaschinen optische Messverfahren bekannt. In einigen Fällen besteht das zu vermessende Produkt oder der zu vermessende stabförmige Artikel aus unterschiedlichen Materialien, welche bevorzugt unabhängig voneinander zu prüfen sind. Hierfür ist eine messtechnische Trennung der Materialien erforderlich, wobei die Materialien bevorzugt über die Helligkeit in den Bildaufnahmen detektierbar sind. Insbesondere bei glänzenden Materialien, beispielsweise einer Leimspur, einem Metallteil, glänzendem Kunststoff oder anderen glänzenden Materialien, ist eine messtechnische Trennung des Materials von einem hellen Hintergrund, beispielsweise weißem Papier oder weißem Celluloseacetat, fehlerhaft. In einer Bildaufnahme, die bevorzugt unter Verwendung eines hellen Blitzlichts erzeugt wurde, sind sowohl das Grundmaterial, beispielsweise Celluloseacetat oder weißes Papier, als auch das glänzende Material in ähnlicher Helligkeit abgebildet.

In der EP2677273 ist eine Vorrichtung zur dreidimensionalen Vermessung und Analyse der Tiefeninformation einer Stirnfläche eines stabförmigen Artikels der tabakverarbeitenden Industrie offenbart, die zusätzlich ein Farb-/Graustufen-/Schwarz-Weiß-Bild der Stirnfläche aufnimmt, um Qualitätsinformation zu erhalten, die nicht in der Tiefeninformation enthalten ist, wie beispielsweise Verfärbungen, (Bild-)Muster oder farbige Elemente. Eine dort offenbarte Vorrichtung weist die aufgeführten Nachteile zur messtechnischen Trennung glänzender Materialen zu einem weißen oder hellen Hintergrund auf.

EP 2 952 878 A1, EP 2 677 273 A1, DE 698 38 174 T2 und EP 1 498 723 A1 offenbaren verschiedene Messanordnungen und Verfahren zur optischen Prüfung von Artikeln der tabakverarbeitenden Industrie.

Aufgabe der vorliegenden Erfindung ist das Bereitstellen eines Verfahrens zum Prüfen einer Oberfläche und einer Messanordnung, das bzw. die eine zuverlässige messtechnische Trennung von glänzenden Materialien auf weißem oder hellem Hintergrund gewährleistet.

Die Aufgabe wird gelöst durch ein Verfahren nach dem vorliegenden Anspruch 1, umfassend u.a. folgende Schritte: Bereitstellen eines stabförmigen Artikels, Fördern des stabförmigen Artikels entlang eines Förderwegs, Beleuchten einer Oberfläche, insbesondere einer Stirnfläche oder einem Abschnitt einer Mantelfläche, eines stabförmigen Artikels durch eine Beleuchtungseinrichtung, bevorzugt eine LED-Beleuchtung oder eine Laser-Beleuchtung aufweisend, insbesondere zeitweise beleuchtend, bevorzugt für eine Dauer zwischen 1 µs bis 100 µs, und besonders bevorzugt in regelmäßig aufeinander folgenden Abständen, Erstellen einer Aufnahme, durch eine Kamera, bevorzugt eine Schwarz-Weiß-Kamera, von der Oberfläche des stabförmigen Artikels, wobei das durch die Beleuchtungseinrichtung ausgestrahlte und von der Oberfläche reflektierte Licht in der Kamera detektiert wird und einen Strahlenpfad bildet, wobei das Licht auf dem Strahlenpfad durch eine Polarisationseinrichtung, angeordnet in oder benachbart zu der Beleuchtungseinrichtung und/oder als Polarisationsfilter und/oder als polarisierender Strahlenteiler ausgebildet, polarisiert wird, insbesondere linear, bevorzugt mit einem Polarisationsgrad von größer 0,5 oder 0,7 oder 0,9 oder 0,98, dadurch gekennzeichnet, dass mindestens zwei Polarisationseinrichtungen benachbart zueinander, insbesondere entlang des Strahlenpfades stromabwärts der Oberfläche, angeordnet sind, wobei sich die Polarisationswinkel der Polarisationseinrichtungen unterscheiden, insbesondere um 90° oder 45° versetzt sind, und/oder dass mindestens zwei Aufnahmen, durch die Kamera, bevorzugt eine Schwarz-Weiß-Kamera, von der, insbesondere derselben oder im Wesentlichen derselben, Oberfläche des stabförmigen Artikels erstellt werden, wobei das durch die Beleuchtungseinrichtung ausgestrahlte und von der Oberfläche reflektierte Licht in der Kamera detektiert wird, insbesondere beide Aufnahmen auf einem Kamerachip, bevorzugt gleichzeitig, aufgenommen werden, und wobei insbesondere das in die Kamera einfallende Licht zur Erstellung der beiden Aufnahmen bevorzugt jeweils durch eine Polarisationseinrichtung polarisiert wird, wobei sich die Polarisationswinkel der Polarisationseinrichtungen unterscheiden, insbesondere um 90° oder 45° versetzt sind. Durch die Verwendung von polarisiertem Licht oder durch die Erstellung von mehreren Bildaufnahmen, wobei mindestens eine Bildaufnahme oder mindestens zwei Bildaufnahmen mit polarisiertem Licht erstellt wurde bzw. wurden, sind zuverlässig glänzende Bereiche auf der Oberfläche eines stabförmigen Artikels detektierbar.

Eine bevorzugte Ausführungsform des Verfahrens ist dadurch gekennzeichnet, dass ein Polarisationsfilter und/oder ein polarisierender Strahlenteiler zwischen Beleuchtungseinrichtung und Oberfläche und/oder zwischen Oberfläche und Kamera angeordnet ist oder sind. Eine Polarisationseinrichtung ist an einer beliebigen Stelle auf dem Strahlenpfad anzuordnen, bevorzugt im ersten Drittel, im zweiten Drittel oder im dritten Drittel des Strahlenpfads, oder bevorzugt im Bereich von ±20 % der Länge des Strahlenpfads der Mitte. Wahlweise ist sowohl das auf die zu vermessende Oberfläche fallende Licht als auch das von der Kamera detektierte Licht durch eine Polarisationseinrichtung zu polarisieren.

Eine bevorzugte Ausführungsform des Verfahrens ist dadurch gekennzeichnet, dass mindestens zwei Aufnahmen von der, bevorzugt derselben oder im Wesentlichen derselben, Oberfläche, insbesondere gleichzeitig, erstellt werden und mindestens eine Aufnahme mit polarisiertem Licht erstellt wird, und die Unterschiede der mindestens zwei Aufnahmen ausgewertet werden, insbesondere eine Differenz oder ein Quotient der beiden Aufnahmen gebildet und bevorzugt das Differenz- bzw. Quotientenbild ausgewertet wird. Durch die Betrachtung und Auswertung der Unterschiede der beiden Aufnahmen, insbesondere durch die Auswertung eines Differenzbildes, ist die messtechnische Trennung von glänzenden Materialien auf weißem oder hellem Hintergrund zuverlässig möglich. Neben dem Unterdrücken von Spiegelungen und Reflexionen durch eine Polarisationseinrichtung ist durch die Differenzbildung von zwei Aufnahmen die Erkennung von den entsprechenden Bereichen mit erhöhter Zuverlässigkeit möglich, da somit die Wirkung der mindestens einen Polarisationseinrichtung gezielt auswertbar ist.

Eine bevorzugte Ausführungsform des Verfahrens ist dadurch gekennzeichnet, dass eine Aufnahme ohne polarisiertes Licht erstellt und eine weitere Aufnahme mit polarisiertem Licht erstellt wird oder dass zwei Aufnahmen mit unterschiedlich polarisiertem Licht erstellt werden.

Eine bevorzugte Ausführungsform des Verfahrens ist dadurch gekennzeichnet, dass eine Polarisationseinrichtung zwischen Beleuchtungseinrichtung und Oberfläche des Artikels und eine zweite Polarisationseinrichtung zwischen Oberfläche des Artikels und einer Kamera angeordnet ist, wobei die Polarisationswinkel der beiden Polarisationseinrichtungen aufeinander abgestimmt sind, insbesondere die gleiche oder sich durch eine vorgebbare Winkelstellung unterscheidende Polarisationswinkel aufweisen. Durch die Abstimmung der Polarisationseinrichtungen sowohl auf die zu vermessende Oberfläche als auch untereinander sind die entsprechenden optischen Effekte, insbesondere die Spiegelungen und Glanzerscheinungen, entsprechend beeinflussbar. Hierdurch lässt sich eine vorteilhafte messtechnische Trennung der unterschiedlichen Materialien umsetzen.

Eine bevorzugte Ausführungsform des Verfahrens ist dadurch gekennzeichnet, dass die stabförmigen Artikel nach dem Bereitstellen und vor dem Prüfen der Oberfläche ausgerichtet werden, insbesondere durch Rotation in eine vordefinierte Winkelstellung gedreht werden. Ist vor das messtechnische Prüfen eine Ausrichteinheit vorgeschaltet, um die stabförmigen Artikel in eine vordefinierte Position auszurichten, insbesondere in eine vordefinierte Position zu verdrehen, können bei der Auswertung der Aufnahmen vordefinierte Bereiche gezielt untersucht, analysiert und detektiert werden. Die Ausrichteinheit weist bevorzugt eine Magnetisierungseinrichtung auf und ist insbesondere gemäß einer der in der EP 3 461 352 A1 offenbarten Ausführungsformen ausgebildet.

Eine bevorzugte Ausführungsform des Verfahrens ist dadurch gekennzeichnet, dass es sich bei der Oberfläche um eine Stirnfläche des stabförmigen Artikels handelt und basierend auf einer Bildauswertung Bereiche identifiziert werden, in denen der gerichtet reflektierte Anteil größer als der diffus reflektierte Anteil des auf diese Bereiche fallenden Lichts ist, um insbesondere die Lage und/oder die Ausrichtung der Bereiche in Bezug auf den Umfang und/oder das Zentrum der Stirnfläche zu bestimmen und/oder mit einem Sollwert zu vergleichen. Mit dieser vorteilhaften Ausgestaltung des Verfahrens sind Bereiche, die unterschiedlichen Materialien zugeordnet werden können, auswertbar, lokalisierbar und auf ihre richtige Anordnung innerhalb des stabförmigen Produktes oder innerhalb der Stirnfläche des stabförmigen Produktes detektier- und prüfbar.

Eine bevorzugte Ausführungsform des Verfahrens ist dadurch gekennzeichnet, dass der stabförmige Artikel ausgeschleust wird, sofern die Lage und/oder Ausrichtung der Bereiche in Bezug auf den Umfang und/oder des Zentrums der Stirnfläche von einem Sollwert um mehr als einen Toleranzbereich Tb abweicht, wobei der Toleranzbereich Tb bevorzugt in zwei orthogonale Komponenten zerlegt ist, sodass die Lage, die Abweichung der Lage und/oder Ausrichtung vom Sollwert nicht größer als TbR1 in Richtung R1 und/oder nicht größer als TbR2 in Richtung R2 ist, insbesondere der Toleranzbereich Tb, TbR1 und/oder TbR2 maximal ±2 mm, ±1 mm oder ±0,5 mm beträgt.

Die Aufgabe wird ebenfalls durch eine Messanordnung nach Anspruch 9 gelöst mit einer Bereitstellungsvorrichtung für stabförmige Artikel, einer Fördervorrichtung mit mindestens einer Aufnahme für stabförmige Artikel, einer Beleuchtungseinrichtung zum Beleuchten einer Oberfläche, insbesondere einer Stirnfläche oder einem Abschnitt der Mantelfläche, eines stabförmigen Artikels, insbesondere eingerichtet um eine zeitweise, bevorzugt für eine Dauer zwischen 1 µs bis 100 µs, und besonders bevorzugt in regelmäßigen Abständen aufeinander folgende Beleuchtung zu erzeugen, einer Kamera, bevorzugt Schwarz-Weiß-Kamera, eingerichtet und angeordnet zur Aufnahme von der Oberfläche des stabförmigen Artikels, wobei das durch die Beleuchtungseinrichtung ausgestrahlte und von der Oberfläche reflektierte Licht von der Kamera detektierbar ist, und einer Polarisationseinrichtung, die bevorzugt innerhalb oder benachbart zu der Beleuchtungseinrichtung angeordnet, als Polarisationsfilter und/oder durch einen polarisierenden Strahlenteiler ausgebildet ist, wobei insbesondere eine Schutzvorrichtung, die bevorzugt als optisch durchsichtige Scheibe ausgebildet ist, und insbesondere eine Einheit zum Sauberblasen der Schutzvorrichtung vorgesehen ist, dadurch gekennzeichnet, dass die Polarisationseinrichtung zwischen Aufnahme der Fördervorrichtung und der Kamera angeordnet ist sowie ausgebildet und eingerichtet ist, linear polarisiertes Licht mit einem Polarisationsgrad von größer 0,5 oder 0,7 oder 0,9 oder 0,98 zu erzeugen, und/oder dass die Messanordnung mindestens zwei Polarisationseinrichtungen aufweist, wobei insbesondere sich die Polarisationswinkel der Polarisationseinrichtungen unterscheiden, insbesondere um 90° oder 45° versetzt sind.

Um Wiederholungen zu vermeiden gelten die Vorteile für das Messverfahren analog für die entsprechenden Messanordnungen.

Eine bevorzugte Ausführungsform der Messanordnung ist dadurch gekennzeichnet, dass ein Polarisationsfilter und/oder ein polarisierender Strahlenteiler zwischen Beleuchtungseinrichtung und Aufnahme der Fördervorrichtung und/oder zwischen Aufnahme der Fördervorrichtung und Kamera angeordnet ist oder sind.

Eine bevorzugte Ausführungsform der Messanordnung ist dadurch gekennzeichnet, dass die Kamera eingerichtet ist mindestens zwei Aufnahmen von derselben Oberfläche, insbesondere gleichzeitig, zu erstellen, wobei mindestens eine Aufnahme mit polarisiertem Licht erstellt wird, und bevorzugt die Unterschiede der mindestens zwei Aufnahmen ausgewertet werden, insbesondere eine Differenz oder ein Quotient der beiden Aufnahmen erstellt und bevorzugt das Differenz- bzw. Qotientenbild ausgewertet wird.

Die Messanordnung ist dadurch gekennzeichnet, dass die Messanordnung eingerichtet ist, eine Aufnahme ohne polarisiertes Licht und eine weitere Aufnahme mit polarisiertem Licht zu erstellen, oder dass zwei Polarisationseinrichtungen vorgesehen sind, um zwei Aufnahmen mit unterschiedlich polarisiertem Licht zu erstellen, wobei die Polarisationseinrichtungen unterschiedliche Polarisationswinkel aufweisen, welche insbesondere um 90° oder 45° versetzt sind.

Eine bevorzugte Ausführungsform der Messanordnung ist dadurch gekennzeichnet, dass eine Polarisationseinrichtung zwischen Beleuchtungseinrichtung und Aufnahme des stabförmigen Artikels und eine zweite Polarisationseinrichtung zwischen Aufnahme des stabförmigen Artikels und einer Kamera angeordnet ist, wobei die Polarisationswinkel der beiden Polarisationseinrichtungen aufeinander abgestimmt sind, insbesondere die gleiche oder eine durch eine vorgebbare Winkellage unterschiedliche Polarisationswinkel aufweisen.

Eine bevorzugte Ausführungsform der Messanordnung ist dadurch gekennzeichnet, dass zwischen Bereitstellungsvorrichtung und Kamera eine Ausrichteinheit angeordnet ist, die insbesondere ausgebildet und eingerichtet ist die stabförmigen Artikel durch Rotation in eine vordefinierte Winkelstellung zu drehen. Die Ausrichteinheit weist bevorzugt eine Magnetisierungseinrichtung auf.

Eine bevorzugte Ausführungsform der Messanordnung ist dadurch gekennzeichnet, dass die Kamera eingerichtet ist, eine Stirnfläche des stabförmigen Artikels aufzunehmen, und eine Auswerteeinheit vorgesehen ist, die basierend auf einer Bildauswertung Bereiche identifiziert, in denen der gerichtet reflektierte Anteil größer als der diffus reflektierte Anteil des auf diese Bereiche fallenden Lichts ist, um insbesondere die Lage, die Abweichung der Lage und/oder die Ausrichtung der Bereiche in Bezug auf den Umfang und/oder das Zentrum der Stirnfläche des Artikels zu bestimmen oder mit einem Sollwert zu vergleichen.

Eine bevorzugte Ausführungsform der Messanordnung ist dadurch gekennzeichnet, dass eine Ausschleuseinheit vorgesehen ist, die bevorzugt stromabwärts der Kamera angeordnet ist, und der stabförmige Artikel ausgeschleust wird, sofern die Lage, die Abweichung von der Lage und/oder Ausrichtung der Bereiche in Bezug auf den Umfang und/oder das Zentrum der Stirnfläche des Artikels von einem Sollwert um mehr als einen Toleranzbereich Tb abweicht, wobei bevorzugt der Toleranzbereich Tb in zwei orthogonale Komponenten zerlegt ist, sodass die Lage, die Abweichung er Lage und/oder Ausrichtung vom Sollwert durch TbR1 in Richtung R1 und/oder durch TbRo2 in Richtung R2 begrenzt ist, wobei insbesondere der Toleranzbereich Tb, TbR1 und/oder TbR2 maximal ±2 mm, ±1 mm oder ±0,5 mm beträgt.

Bevorzugt sind in jeder offenbarten und beanspruchten Ausführungsform der Messanordnung und des Verfahrens stromaufwärts der Kamera eine Strangeinheit zum Herstellen eines Stranges und/oder eine Schneideinheit zum Schneiden des Stranges in stabförmige Artikel oder zum Schneiden von mehrfach langen stabförmigen Artikeln in stabförmige Artikel beliebiger Länge.

Unter einer Schwarz-Weiß-Kamera ist eine Kamera zu verstehen, die ein Graustufenbild erzeugt. Alternativ oder zusätzlich, bei der Verwendung von mehreren Kameras, ist wahlweise eine Farbkamera zu verwenden. Die in diesen Unterlagen offenbarten Kameras weisen bevorzugt einen Kamerachip oder mehrere Kamerachips auf, bevorzugt zwei, drei oder vier Kamerachips.

Die Erfindung wird weiter im Hinblick auf beispielhafte Ausführungsformen beschrieben, die anhand der folgenden Zeichnungen veranschaulicht werden, in denen:
Fig. 1 zeigt schematisch eine Stirnfläche eines stabförmigen Artikels;
Fig. 2 zeigt schematisch einen Bereich der Mantelfläche eines stabförmigen Artikels;
Fig. 3, 4 und 6 zeigen Ausführungsformen einer Messvorrichtung;
Fig. 5 zeigt einen Kamerachip mit Polarisationsfiltern und
Fig. 7 bis 10 zeigen Aufnahmen und ausgewertete Aufnahmen einer Stirnfläche eines stabförmigen Artikels.

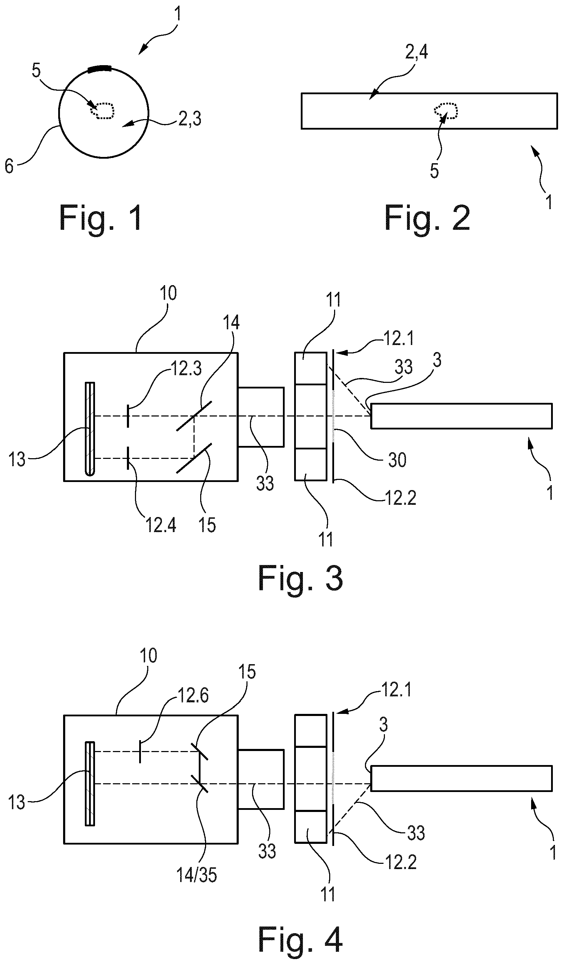

Figur 1 zeigt eine Stirnfläche 3 eines stabförmigen Artikels 1 der tabakverarbeitenden Industrie, welche verschiedene Materialien aufweist. Der Umfang 6 der Stirnfläche ist im Wesentlichen kreisrund und durch ein Umhüllungspapier gebildet. Auf der Stirnfläche sind Bereiche 5, die glänzende Eigenschaften aufweisen. Hierbei kann es sich beispielsweise um Metallteile, Leimflecken oder um glänzenden Kunststoff handeln.

In Figur 2 ist ein Bereich einer Mantelfläche 4 eines stabförmigen Artikels 1 gezeigt, der ebenfalls einen Bereich 5 aufweist, der glänzende Eigenschaften besitzt. Die Bereiche 5 besitzen glänzende Eigenschaften und sind bevorzugt dadurch gekennzeichnet, dass in den Bereichen der gerichtet reflektierte Anteil größer als der diffus reflektierte Anteil des auf diese Bereiche fallenden Lichts ist.

Eine Vorrichtung zum optischen Prüfen einer Stirnfläche 3 eines stabförmigen Artikels 1 der tabakverarbeitenden Industrie ist in Figur 3 gezeigt. Die Vorrichtung weist eine Beleuchtungseinrichtung 11 auf, die als Ring mit einer mittigen Öffnung ausgebildet ist und wobei auf dem Ring Leuchteinheiten, insbesondere eine LED-Beleuchtung angeordnet sind. Die Beleuchtungseinrichtung kann wahlweise einzelne Leuchtmittel aufweisen und nicht als Ring ausgebildet sein, beispielsweise in Form eines "C" oder als einzelne punktförmige Leuchtmittel. Der Strahlenpfad 33 ausgehend von der Beleuchtungseinrichtung 11 über die Oberfläche 2 zur Kamera 10, insbesondere bis zum Pixel-Array 31 ist in Figur 3, 4 und 6 gezeigt. Zwischen der Beleuchtungseinrichtung 11 und der Stirnfläche 3 des stabförmigen Artikels 1 sind die Polarisationseinrichtungen 12.1, 12.2, welche als Polarisationsfilter ausgebildet sind, und eine Schutzvorrichtung 30, die als optisch durchsichtige Scheibe ausgebildet ist, um die Messvorrichtung vor Staubpartikel und/oder Verschmutzung zu schützen, vorgesehen. Eine in Figur 3 nicht gezeigte Einheit zum Sauberblasen der Schutzvorrichtung 30 stellt einen wahlweisen Bestandteil jeder Ausführungsform dar und ist unabhängig von jeder offenbarten oder beanspruchten Ausführungsform. Die Vorrichtung umfasst eine Kamera 10, die einen Kamerachip 13 aufweist sowie ein halbreflektierendes optisches Element 14, ein totalreflektierende optisches Element 15 und zwei Polarisationseinrichtungen 12.3, 12.4, die als Polarisationsfilter ausgebildet sind. Das von der Beleuchtungseinrichtung 11 ausgestrahlte Licht ist durch die Polarisationseinrichtungen 12.1 und 12.2, bevorzugt linear, polarisiert, insbesondere mit dem gleichen Polarisationswinkel. Das von der Stirnfläche 3 des stabförmigen Artikels 1 reflektierte Licht trifft auf das halbreflektierende optisches Element 14, welches als halbreflektierende Spiegel oder halbreflektierende Prisma ausgebildet ist, und ein Teil des Lichts wird auf den Kamerachip 13 weitergeleitet, welches zuvor durch die Polarisationseinrichtung 12.3, welche bevorzugt als Polarisationsfilter ausgebildet ist, polarisiert wird. Der andere Teil des Lichts wird von dem halbreflektierenden optischen Element 14 auf das totalreflektierende optische Element 15 weitergeleitet, welches bevorzugt als Spiegel ausgebildet ist, und durch die Polarisationseinrichtung 12.4, welche als Polarisationsfilter ausgebildet ist, polarisiert und auf einen anderen Bereich des Kamerachips 13 treffend geleitet. Auf dem Kamerachip 13 entstehen zwei separate Bilder der gleichen Stirnfläche 3, welche jeweils durch Licht mit einem Polarisationswinkel basierend auf den Polarisationseinrichtungen 12.3 beziehungsweise 12.4 aufweisen. Die Polarisationseinrichtungen 12.1 bis 12.4 sind bevorzugt aufeinander abgestimmt. Weisen die Polarisationseinrichtungen 12.1 und 12.2 beispielsweise einen horizontalen Polarisationswinkel auf, weist der Polarisationseinrichtung 12.3 bevorzugt ebenfalls einen horizontalen Polarisationswinkel auf und die Polarisationseinrichtung 12.4 bevorzugt einen vertikalen Polarisationswinkel auf. Die Ausrichtung der Polarisationseinrichtungen 12.1 bis 12.4 sind beliebig wählbar und aufeinander anpassbar. Bevorzugt weist mindestens eine der Polarisationseinrichtungen 12.1 und 12.2 den gleichen Polarisationswinkel auf wie eine der Polarisationseinrichtungen 12.3 und 12.4. Bei der Ausführungsform nach Figur 3 ist eine nicht dargestellte Auswerteeinheit vorgesehen, die ein Differenzbild der durch den Kamerachip 13 aufgenommenen separaten Bilder erstellt und auswertet. Die Aufnahmen werden bevorzugt zueinander ausgerichtet und bevorzugt eine Differenzbild 23 erzeugt. Dieses Differenzbild 23 zeigt entsprechende Bereiche 5, die ein glänzendes Material aufweisen. Dieses Verfahren ist analog auf die Bildung von Qotientenbildern anwendbar oder auf eine andersartige Auswertung der Unterschiede von zwei Aufnahmen.

Die in Figur 4 gezeigte Vorrichtung ist eine Abwandlung der in Figur 3 gezeigten Vorrichtung. Um Wiederholungen zu vermeiden sind nachfolgend lediglich die Abwandlungen der Vorrichtung aus Figur 3 beschrieben. Hierbei entspricht die Polarisationseinrichtung 12.6 aus Figur 4 der Polarisationseinrichtung 12.4 aus Figur 3. Der wesentliche Unterschied der beiden Vorrichtungen ist gekennzeichnet, durch das Weglassen der Polarisationseinrichtungen 12.3, sodass das ein Teil des von der Stirnfläche 3 reflektierten Lichts direkt auf den Kamerachip 13 fällt ohne eine Polarisationseinrichtung zu passieren. In einer Abwandlung ist das halbreflektierende optische Element 14 als ein polarisierender Strahlenteiler 35 ausgebildet, sodass zwei Aufnahmen mit polarisiertem Licht erstellt werden.

Wahlweise enthalten die in Figur 3 oder Figur 4 gezeigten Ausführungsformen anstatt einem Kamerachip 13 zwei, drei oder mehr als drei Kamerachips 13. Bevorzugt werden die beiden Bilder mit Licht, die unterschiedliche Polarisationswinkel aufweisen, auf zwei separaten Kamerachips 13 aufgenommen. Wahlweise sind anstatt mehrerer Kamerachips 13 mehr als eine, zwei oder mehr als drei Kameras 10 zu verwenden.

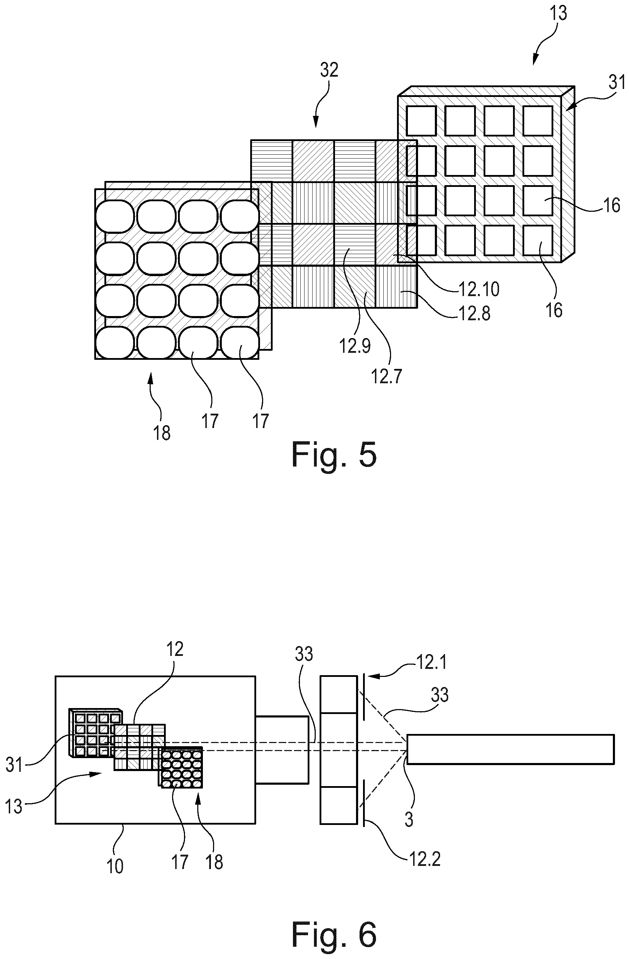

In Figur 5 ist ein Kamerachip 13 einer Polarisationskamera gezeigt, der drei Ebenen aufweist. Der Kamerachip 13 ist als matrixartige Anordnung aus Pixeln 16 ausgebildet, die einen Pixel-Array 31 bilden. Die zweite Ebene weist Polarisationseinrichtungen 12 auf, wobei jedem Pixel 16 ein Polarisationsfilter 12.7 bis 12.10 zugeordnet ist. Die Polarisationsfilter 12.7 bis 12.10 weisen jeweils vier unterschiedliche Polarisationswinkel auf, welche horizontal und vertikal sowie diagonal gemäß der Polarisationseinrichtungen 12.7 bis 12.10 ausgebildet sind. Der Kamerachip 13 ist somit in Pixelgruppen bestehend aus vier Pixeln 16 unterteilt, wobei jedem Pixel 16 eine unterschiedliche Polarisationseinrichtung 12.7 bis 12.10 zugeordnet ist. Dieses Vorgehen ist von handelsüblichen Farbkameras bekannt, wobei jedem Pixel 16 der entsprechenden Pixelgruppe analog eine Grundfarbe zugeordnet ist. Die dritte Ebene weist einen Linsen-Array 18 auf, wobei jedem Pixel 16 eine separate Linse 17 zugeordnet ist. Durch einen derartigen Kamerachip 13 sind mit einem Kamerachip vier Aufnahmen derselben Oberfläche gleichzeitig möglich, wobei jedes Bild durch Licht mit einem anderen Polarisationswinkel entsteht. Diese Ausgestaltung der Vorrichtung ermöglicht eine kompakte und kostengünstige Bauweise einer Polarisationskamera für den entsprechenden Anwendungsfall. Eine Abwandlung des Kamerachips 13 ist durch eine Abwandlung der Polarisationsfilter 12.7 bis 12.10 ausgebildet. Beispielsweise kann der Polarisationsfilter 12.7 entfernt werden, sodass ein Bild durch den Kamerachip 13 aufgenommen wird, welches nicht zuvor durch einen Polarisationsfilter im Polarisationsfilter-Array 32 polarisiert wurde. Eine Abwandlung des in Figur 5 und Figur 6 gezeigten Kamerachips 13 ist zur Aufnahme von Farbbildern ausgebildet. Wobei jeweils ein Pixel 16 zur Erfassung für jede der drei Grundfarben und ein weiterer Pixel zur Erfassung der Graustufen oder einer der drei Grundfarben ausgebildet ist. Bei der Verwendung eines Polarisationsfilter-Arrays 32 mit vier unterschiedlichen Polarisationsfiltern 12.7 bis 12.10 ergeben sich anstatt der vier Pixeln 16 für eine Schwarz-Weiß-Aufnahme sechszehn Pixel 16 für eine Farbaufnahme. Ist der Polarisationsfilter Array 32 lediglich mit Polarisationsfiltern 12.9 und 12.10 oder 12.7 und 12.8 versehen, weist der Kamerachip 13 für Farbaufnahmen lediglich Pixelgruppen von acht Pixeln 16 und bei Schwarz-Weiß-Aufnahmen lediglich Pixelgruppen von zwei Pixeln 16 auf.

In Figur 6 ist der Kamerachip 13 bestehend aus den drei Ebenen, Pixel-Array 31, Polarisationsfilter-Array 32 und Linsen-Array 18, in die in Figur 3 gezeigte Vorrichtung integriert. Das von der Stirnfläche 3 reflektierte und zuvor von den Polarisationseinrichtungen 12.1 und 12.2 polarisierte Licht fällt von der Stirnfläche 3 wahlweise durch die Schutzvorrichtung 30 direkt in die Polarisationskamera, durchdringt den Linsen-Array 18, wird durch den Polarisationsfilter-Array 32 polarisiert und trifft auf den Pixel-Array 31. Die vier so entstandenen Bilder werden durch die Auswerteeinheit ausgewertet und es können beliebige Differenzbilder generiert werden.

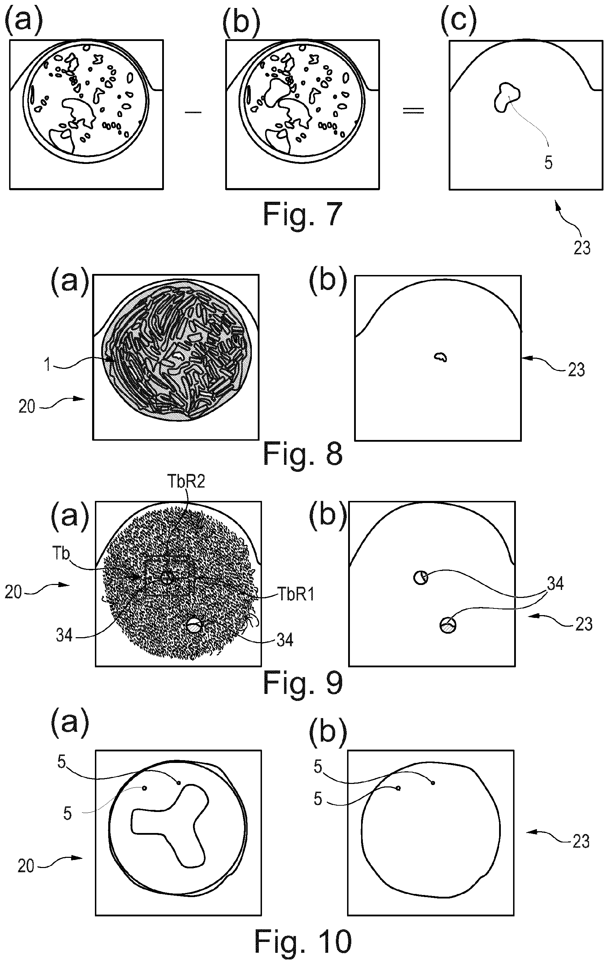

Die Figur 7 zeigt die Differenzbildung zweier Aufnahmen, wobei eine Aufnahme mit polarisiertem Licht entstanden ist, und durch die Differenzbildung ein entsprechender Bereich 5, welcher als reflektierender Leimfleck ausgebildet ist, detektierbar ist. Figur 8 zeigt links eine Schwarz-Weiß-Aufnahme 20 einer Stirnfläche 3 und rechts das Differenzbild 23 wobei erfindungsgemäß eine Aufnahme mit polarisiertem Licht entstanden ist. Der stabförmige Artikel 1 weist einen Tabakstock aus in Streifen geschnittener Rekonfolie auf, wobei mittig ein Metalldraht angeordnet ist. Auf dem Differenzbild 23 ist die Position des reflektierenden Metalldrahts klar und deutlich zu erkennen.

Figur 9 zeigt links einen Acetatfilter mit zwei Metalldrähten 34, welche versetzt zueinander angeordnet sind. Auf dem Differenzbild 23 sind die Positionen der Metalldrähte 34 deutlich zu erkennen. Weicht die detektierte Lage des Metalldrahtes 34 von einem Sollwert um mehr als einen Toleranzbereich Tb ab, wird dieser Artikel 1 durch eine Ausschleuseinheit ausgeschleust. Der Toleranzbereich Tb ist wahlweise in zwei orthogonale Komponenten TbR1 und TbR2 zerlegbar.

Figur 10 zeigt einen Hohlfilter, der mit aluminiumkaschiertem Papier umwickelt ist. Auf der Stirnfläche 3 des Hohlfilters befinden sich kleine Leimflecken 5, welche auf dem herkömmlichen Schwarz-Weiß-Bild 20 kaum zu erkennen sind. Auf dem Differenzbild 23 sind die kleinen Leimflecken 5 und die Randbereiche des mit aluminiumkaschierten Umhüllungspapiers deutlich zu erkennen.

## Patentansprüche

1. Verfahren zum Prüfen einer Oberfläche (2), nämlich einer Stirnfläche (3), eines stabförmigen Artikels (1) der tabakverarbeitenden Industrie, umfassend folgende Schritte:
- Bereitstellen eines stabförmigen Artikels (1),
- Fördern eines stabförmigen Artikels (1) entlang eines Förderwegs,
- Beleuchten einer Oberfläche (2), nämlich der Stirnfläche (3), des stabförmigen Artikels (1) durch eine Beleuchtungseinrichtung (11),
- Erstellen einer Aufnahme durch eine Kamera (10) von der Oberfläche (2) des stabförmigen Artikels (1), wobei das durch die Beleuchtungseinrichtung ausgestrahlte und von der Oberfläche (2) reflektierte Licht in der Kamera (10) detektiert wird und einen Strahlenpfad (33) bildet,
- wobei das Licht auf dem Strahlenpfad (33) durch eine Polarisationseinrichtung (12) polarisiert wird,
**dadurch gekennzeichnet, dass**
mindestens zwei Polarisationseinrichtungen (12) benachbart zueinander angeordnet sind, wobei sich die Polarisationswinkel der Polarisationseinrichtungen (12) unterscheiden,
und/oder
dass mindestens zwei Aufnahmen (20 bis 22) durch eine Kamera (10) von der Oberfläche des stabförmigen Artikels (1) erstellt werden, wobei das durch die Beleuchtungseinrichtung (11) ausgestrahlte und von der Oberfläche (2) reflektierte Licht in der Kamera (10) detektiert wird.

2. Verfahren nach Anspruch 1, **dadurch gekennzeichnet, dass** ein Polarisationsfilter (12.1 bis 12.10) und/oder ein polarisierender Strahlenteiler (35) zwischen Beleuchtungseinrichtung (11) und Oberfläche (2) und/oder zwischen Oberfläche (2) und Kamera (10) angeordnet ist oder sind.

3. Verfahren nach einem der Ansprüche 1 und 2, **dadurch gekennzeichnet, dass** mindestens zwei Aufnahmen (20 bis 22) von der Oberfläche (2) erstellt werden und mindestens eine Aufnahme (20 bis 22) mit polarisiertem Licht erstellt wird, und die Unterschiede der mindestens zwei Aufnahmen ausgewertet werden.

4. Verfahren nach einem der Ansprüche 1 bis 3, **dadurch gekennzeichnet, dass** eine Aufnahme (20 bis 22) ohne polarisiertes Licht erstellt und eine weitere Aufnahme (20 bis 22) mit polarisiertem Licht erstellt wird oder dass zwei Aufnahmen (20 bis 22) mit unterschiedlich polarisiertem Licht erstellt werden.

5. Verfahren nach einem der Ansprüche 1 bis 4, **dadurch gekennzeichnet, dass** eine Polarisationseinrichtung (12) zwischen Beleuchtungseinrichtung (11) und Oberfläche (2) des Artikels (1) und eine zweite Polarisationseinrichtung (12) zwischen Oberfläche (2) des Artikels (1) und einer Kamera (10) angeordnet ist, wobei die Polarisationswinkel der beiden Polarisationseinrichtungen (12) aufeinander abgestimmt sind.

6. Verfahren nach einem der Ansprüche 1 bis 5, **dadurch gekennzeichnet, dass** die stabförmigen Artikel (1) nach dem Bereitstellen und vor dem Prüfen der Oberfläche (2) ausgerichtet werden.

7. Verfahren nach einem der Ansprüche 1 bis 6, **dadurch gekennzeichnet, dass** basierend auf einer Bildauswertung Bereiche (5) identifiziert werden, in denen der gerichtet reflektierte Anteil größer als der diffus reflektierte Anteil des auf diese Bereiche (5) fallenden Lichts ist.

8. Verfahren nach Anspruch 7, **dadurch gekennzeichnet, dass** der stabförmige Artikel (1) ausgeschleust wird, sofern die Lage und/oder Ausrichtung der Bereiche (5) in Bezug auf den Umfang und/oder des Zentrums der Stirnfläche (3) von einem Sollwert um mehr als einen Toleranzbereich (Tb) abweicht.

9. Messanordnung zum Prüfen einer Oberfläche (2), nämlich einer Stirnfläche (3), eines stabförmigen Artikels (1) der tabakverarbeitenden Industrie mit einer Bereitstellungsvorrichtung für stabförmige Artikel (1),
einer Fördervorrichtung mit mindestens einer Aufnahme für stabförmige Artikel (1),
einer Beleuchtungseinrichtung (11) zum Beleuchten einer Oberfläche (2), nämlich einer Stirnfläche (3), eines stabförmigen Artikels (1),
einer Kamera (10) eingerichtet und angeordnet zur Aufnahme von der Oberfläche (2) des stabförmigen Artikels (1), wobei das durch die Beleuchtungseinrichtung (11) ausgestrahlte und von der Oberfläche (2) reflektierte Licht von der Kamera (10) detektierbar ist, und
einer Polarisationseinrichtung (12)
**dadurch gekennzeichnet, dass**
die Polarisationseinrichtung (12) ausgebildet und eingerichtet ist, linear polarisiertes Licht zu erzeugen und/oder dass die Messanordnung mindestens zwei Polarisationseinrichtungen (12) aufweist, wobei sich die Polarisationswinkel der Polarisationseinrichtungen (12) unterscheiden, wobei die Messanordnung eingerichtet ist, eine Aufnahme ohne polarisiertes Licht und eine weitere Aufnahme mit polarisiertem Licht zu erstellen
oder
dass zwei Polarisationseinrichtungen (12) vorgesehen sind, um zwei Aufnahmen (20 bis 22) mit unterschiedlich polarisiertem Licht zu erstellen, wobei die Polarisationseinrichtungen (12) unterschiedliche Polarisationswinkel aufweisen.

10. Messanordnung nach Anspruch 9, **dadurch gekennzeichnet, dass** ein Polarisationsfilter (12.1 bis 12.10) und/oder ein polarisierender Strahlenteiler (35) zwischen Beleuchtungseinrichtung (11) und Aufnahme der Fördervorrichtung und/oder zwischen Aufnahme der Fördervorrichtung und Kamera (10) angeordnet ist oder sind.

11. Messanordnung nach einem der Ansprüche 9 und 10 **dadurch gekennzeichnet, dass** die Kamera (10) eingerichtet ist, mindestens zwei Aufnahmen (20 bis 22) von der Oberfläche (2) zu erstellen, wobei mindestens eine Aufnahme mit polarisiertem Licht erstellt wird.

12. Messanordnung nach einem der Ansprüche 9 bis 11, **dadurch gekennzeichnet, dass** eine Polarisationseinrichtung (10) zwischen Beleuchtungseinrichtung (11) und Aufnahme des stabförmigen Artikels (1) und eine zweite Polarisationseinrichtung (12) zwischen Aufnahme des stabförmigen Artikels (1) und einer Kamera (10) angeordnet ist, wobei die Polarisationswinkel der beiden Polarisationseinrichtungen (12) aufeinander abgestimmt sind.

13. Messanordnung nach einem der Ansprüche 9 bis 12, **dadurch gekennzeichnet, dass** zwischen Bereitstellungsvorrichtung und Kamera (10) eine Ausrichteinheit angeordnet ist.

14. Messanordnung nach einem der Ansprüche 9 bis 13 **dadurch gekennzeichnet, dass** die Kamera (10) eingerichtet ist eine Stirnfläche (3) des stabförmigen Artikels (1) aufzunehmen und eine Auswerteinheit vorgesehen ist, die basierend auf einer Bildauswertung Bereiche (5) identifiziert, in denen der gerichtet reflektierte Anteil größer als der diffus reflektierte Anteil des auf diese Bereiche (5) fallenden Lichts ist.

15. Messanordnung nach Anspruch 14, **dadurch gekennzeichnet, dass** eine Ausschleuseinheit vorgesehen ist, die zum Ausschleusen der stabförmigen Artikel (10) eingerichtet ist, sofern die Lage, die Abweichung von der Lage und/oder Ausrichtung der Bereiche (5) in Bezug auf den Umfang und/oder das Zentrum der Stirnfläche (3) des Artikels (1) von einem Sollwert um mehr als einen Toleranzbereich (Tb) abweicht.

## Claims

1. Method for testing a surface (2), specifically an end face (3), of a rod-shaped article (1) of the tobacco processing industry, comprising the following steps:
- providing a rod-shaped article (1),
- conveying a rod-shaped article (1) along a conveying path,
- illuminating a surface (2), specifically the end face (3), of the rod-shaped article (1) by means of an illumination device (11),
- creating an image of the surface (2) of the rod-shaped article (1) by means of a camera (10), the light emitted by means of the illumination device and reflected by the surface (2) being detected in the camera (10) and forming a beam path (33),
- the light on the beam path (33) being polarised by means of a polarisation device (12),
**characterised in that**
at least two polarisation devices (12) are arranged adjacent to one another, the polarisation angles of the polarisation devices (12) differing,
and/or
**in that** at least two images (20 to 22) of the surface of the rod-shaped article (1) are created by means of a camera (10), the light emitted by means of the illumination device (11) and reflected by the surface (2) being detected in the camera (10).

2. Method according to claim 1, **characterised in that** a polarisation filter (12.1 to 12.10) and/or a polarising beam splitter (35) is or are arranged between the illumination device (11) and the surface (2) and/or between the surface (2) and the camera (10).

3. Method according to either claim 1 or claim 2, **characterised in that** at least two images (20 to 22) of the surface (2) are created, and at least one image (20 to 22) is created using polarised light, and the differences between the at least two images are evaluated.

4. Method according to any of claims 1 to 3, **characterised in that** one image (20 to 22) is created without polarised light and another image (20 to 22) is created using polarised light or that two images (20 to 22) are created using differently polarised light.

5. Method according to any of claims 1 to 4, **characterised in that** a polarisation device (12) is arranged between the illumination device (11) and the surface (2) of the article (1) and a second polarisation device (12) is arranged between the surface (2) of the article (1) and a camera (10), the polarisation angles of the two polarisation devices (12) being coordinated with one another.

6. Method according to any of claims 1 to 5, **characterised in that** the rod-shaped articles (1) are aligned after provision and before testing of the surface (2).

7. Method according to any of claims 1 to 6,
**characterised in that,**
based on image analysis, regions (5) are identified in which the portion of the light incident on these regions (5) that is reflected in a directed manner is greater than the portion that is reflected in a diffuse manner.

8. Method according to claim 7, **characterised in that** the rod-shaped article (1) is discharged if the position and/or alignment of the regions (5) in relation to the circumference and/or the centre of the end face (3) deviates from a target value by more than a tolerance range (Tb).

9. Measuring arrangement for testing a surface (2), specifically an end face (3), of a rod-shaped article (1) of the tobacco processing industry, comprising a provision apparatus for rod-shaped articles (1),
a conveying apparatus having at least one receptacle for rod-shaped articles (1),
an illumination device (11) for illuminating a surface (2), specifically an end face (3), of a rod-shaped article (1),
a camera (10) designed and arranged to capture the surface (2) of the rod-shaped article (1), the light emitted by means of the illumination device (11) and reflected by the surface (2) being detectable by means of the camera (10), and
a polarisation device (12)
**characterised in that**
the polarisation device (12) is designed and configured to generate linearly polarised light and/or **in that** the measuring arrangement has at least two polarisation devices (12), the polarisation angles of the polarisation devices (12) differing, and the measuring arrangement being designed to create an image without polarised light and to create a further image using polarised light
or
**in that** two polarisation devices (12) are provided in order to create two images (20 to 22) using differently polarised light, the polarisation devices (12) having different polarisation angles.

10. Measuring arrangement according to claim 9, **characterised in that** a polarisation filter (12.1 to 12.10) and/or a polarising beam splitter is or are arranged between the illumination device (11) and the receptacle of the conveying device and/or between the receptacle of the conveying device and the camera (10).

11. Measuring arrangement according to either claim 9 or claim 10, **characterised in that** the camera (10) is designed to create at least two images (20 to 22) of the surface (2), at least one image being created using polarised light.

12. Measuring arrangement according to any of claims 9 to 11, **characterised in that** a polarisation device (10) is arranged between the illumination device (11) and the receptacle for the rod-shaped article (1), and a second polarisation device (12) is arranged between the receptacle for the rod-shaped article (1) and a camera (10), the polarisation angles of the two polarisation devices (12) being coordinated with one another.

13. Measuring arrangement according to any of claims 9 to 12, **characterised in that** an alignment unit is arranged between the provision apparatus and the camera (10).

14. Measuring arrangement according to any of claims 9 to 13, **characterised in that** the camera (10) is designed to record an end face (3) of the rod-shaped article (1), and an evaluation unit is provided which, based on an image evaluation, identifies regions (5) in which the portion of the light incident on these regions (5) that is reflected in a directed manner is greater than the portion that is reflected in a diffuse manner.

15. Measuring arrangement according to claim 14, **characterised in that** a discharge unit is provided which is designed to discharge the rod-shaped articles (10) if the position, the deviation from the position and/or alignment of the regions (5) in relation to the circumference and/or the centre of the end face (3) of the article (1) deviates from a target value by more than a tolerance range (Tb).

## Revendications

1. Procédé pour contrôler d'une surface (2), à savoir une surface frontale (3), d'un article en forme de tige (1) de l'industrie de traitement du tabac, comprenant les étapes consistant à :
- fournir un article en forme de tige (1),
- transporter un article en forme de tige (1) le long d'un trajet de transport,
- éclairer une surface (2), à savoir la surface frontale (3), de l'article en forme de tige (1) par un moyen d'éclairage (11),
- réaliser une prise de vue par une caméra (10) de la surface (2) de l'article en forme de tige (1), la lumière émise par le moyen d'éclairage et réfléchie par la surface (2) étant détectée dans la caméra (10) et formant un trajet de faisceau (33),
- la lumière étant polarisée sur le trajet de faisceau (33) par un moyen de polarisation (12),
**caractérisé en ce**
**qu'**au moins deux moyens de polarisation (12) sont disposés au voisinage l'un de l'autre, les angles de polarisation des moyens de polarisation (12) étant différents, et/ou
**qu'**au moins deux prises de vue (20 à 22) sont réalisées par une caméra (10) de la surface de l'article en forme de tige (1), la lumière émise par le moyen d'éclairage (11) et réfléchie par la surface (2) étant détectée dans la caméra (10).

2. Procédé selon la revendication 1, **caractérisé en ce qu'**un filtre de polarisation (12.1 à 12.10) et/ou un séparateur de faisceau polarisant (35) est ou sont disposés entre le moyen d'éclairage (11) et la surface (2) et/ou entre la surface (2) et la caméra (10).

3. Procédé selon l'une des revendications 1 et 2, **caractérisé en ce qu'**au moins deux prises de vue (20 à 22) de la surface (2) sont réalisées et qu'au moins une prise de vue (20 à 22) est réalisée avec une lumière polarisée, et les différences desdites au moins deux prises de vue sont évaluées.

4. Procédé selon l'une des revendications 1 à 3, **caractérisé en ce qu'**une prise de vue (20 à 22) est réalisée sans lumière polarisée et une autre prise de vue (20 à 22) est réalisée avec une lumière polarisée ou que deux prises de vue (20 à 22) sont réalisées avec une lumière polarisée différente.

5. Procédé selon l'une des revendications 1 à 4, **caractérisé en ce qu'**un moyen de polarisation (12) est disposé entre le moyen d'éclairage (11) et la surface (2) de l'article (1) et un deuxième moyen de polarisation (12) est disposé entre la surface (2) de l'article (1) et une caméra (10), les angles de polarisation des deux moyens de polarisation (12) étant accordés l'un à l'autre.

6. Procédé selon l'une des revendications 1 à 5, **caractérisé en ce que** les articles en forme de tige (1) sont orientés après la fourniture et avant le contrôle de la surface (2).

7. Procédé selon l'une des revendications 1 à 6, **caractérisé en ce que**, sur la base d'une évaluation d'image, des zones (5) sont identifiées dans lesquelles la part réfléchie de manière dirigée est supérieure à la part réfléchie de manière diffuse de la lumière incidente sur ces zones (5).

8. Procédé selon la revendication 7, **caractérisé en ce que** l'article en forme de tige (1) est déchargé dans la mesure où la position et/ou l'orientation des zones (5) par rapport à la périphérie et/ou au centre de la surface frontale (3) s'écarte d'une valeur de consigne de plus d'une plage de tolérance (Tb).

9. Agencement de mesure pour contrôler une surface (2), à savoir une surface frontale (3), d'un article en forme de tige (1) de l'industrie de transformation du tabac, comprenant :
un dispositif de fourniture d'articles en forme de tige (1),
un dispositif de transport avec au moins un logement pour des articles en forme de tige (1),
un moyen d'éclairage (11) pour éclairer une surface (2), à savoir une surface frontale (3), d'un article en forme de tige (1),
une caméra (10) conçue et disposée pour prendre des vues de la surface (2) de l'article en forme de tige (1), la lumière émise par le moyen d'éclairage (11) et réfléchie par la surface (2) pouvant être détectée par la caméra (10), et
un moyen de polarisation (12),
**caractérisé en ce que**
le moyen de polarisation (12) est réalisé et conçu pour produire une lumière polarisée linéairement et/ou que l'agencement de mesure présente au moins deux moyens de polarisation (12), les angles de polarisation des moyens de polarisation (12) étant différents, l'agencement de mesure étant conçu pour réaliser une prise de vue sans lumière polarisée et une autre prise de vue avec une lumière polarisée ou
que deux moyens de polarisation (12) sont prévus pour réaliser deux prises de vue (20 à 22) avec une lumière polarisée différente, les moyens de polarisation (12) présentant des angles de polarisation différents.

10. Agencement de mesure selon la revendication 9, **caractérisé en ce qu'**un filtre de polarisation (12.1 à 12.10) et/ou un séparateur de faisceau polarisant (35) est ou sont disposés entre le moyen d'éclairage (11) et le logement du dispositif de transport et/ou entre le logement du dispositif de transport et la caméra (10).

11. Agencement de mesure selon l'une des revendications 9 et 10, **caractérisé en ce que** la caméra (10) est conçue pour réaliser au moins deux prises de vue (20 à 22) de la surface (2), au moins une prise de vue étant réalisée avec une lumière polarisée.

12. Agencement de mesure selon l'une des revendications 9 à 11, **caractérisé en ce qu'**un moyen de polarisation (10) est disposé entre le moyen d'éclairage (11) et le logement de l'article en forme de tige (1) et un deuxième moyen de polarisation (12) est disposé entre le logement de l'article en forme de tige (1) et une caméra (10), les angles de polarisation des deux moyens de polarisation (12) étant accordés l'un à l'autre.

13. Agencement de mesure selon l'une des revendications 9 à 12, **caractérisé en ce qu'**une unité d'alignement est disposée entre le dispositif de fourniture et la caméra (10).

14. Agencement de mesure selon l'une des revendications 9 à 13, **caractérisé en ce que** la caméra (10) est conçue pour prendre des vues d'une surface frontale (3) de l'article en forme de tige (1) et qu'il est prévu une unité d'évaluation qui, sur la base d'une évaluation d'image, identifie des zones (5) dans lesquelles la part réfléchie de manière dirigée est supérieure à la part réfléchie de manière diffuse de la lumière incidente sur ces zones (5).

15. Agencement de mesure selon la revendication 14, **caractérisé en ce qu'**il est prévu une unité de décharge qui est conçue pour décharger les articles en forme de tige (10) dans la mesure où la position, l'écart de position et/ou l'orientation des zones (5) par rapport à la périphérie et/ou au centre de la face frontale (3) de l'article (1) s'écarte d'une valeur de consigne de plus d'une plage de tolérance (Tb).
